# EUROPEAN PATENT APPLICATION

(11) **EP 1 881 654 A1**
(43) Date of publication of application: **23.01.2008**
(21) Application number: 05738572.6
(22) Date of filing: 13.05.2005
(51) Int. Cl.: H04L 12/56, H04L 12/66

(54) **PEER-TO-PEER COMMUNICATION METHOD AND SYSTEM ENABLING CALL AND ARRIVAL**

(71) Applicant: Nessociet Inc., Tokyo 104-0031 (JP)
(72) Inventor: MIZUNO, Michio, 1040051 (JP)
(74) Representative: Möbus, Steffen
(86) International application number: PCT/JP2005/008783
(87) International publication number: WO 2006/120751

(57) **Abstract**

A virtual device driver is installed in a client terminal and a server as software, and also a virtual hub is installed in a server as software.

For example, by giving an L2-VPN function to the SIP terminal node itself, and installing the above-mentioned software in the existing server node,
it is not necessary to install a special server node, and even when between the clients terminals which communicate use what kind of network environment and a protocol, peer-to-peer communication is enabled general-purpose.

## Description

### [Field of the Invention]

Especially this invention relates to the peer-to-peer communication method and system enabling call out and calling in (call and arrival).

### [Background of the Invention]

The "Internet" is shouldering the big role in present-day data communications.
The essence is the complex composition of the part equivalent to a public network "WAN", and the private network "LAN" currently used in the company and the like.
For this reason, a fault sometimes occurs in communication between two information terminals or an information terminal and a server.
Also in VoIP (Voice over Internet Protocol) which is a kind of data communications, this is caused on the problem of generating of communication failure.

In a public network and a private network, the numbering systems of the "IP address" which is about an address on an IP network differ.
For this reason, in order to access the node which is in the public network side from the inside of a private network, "NAT" which is the network-address-translation function implemented in the "router" device which connects a private network and a public network is used.

However, although it came to be able to perform access from the private network side to the public network side with this network-address-translation technology, there was a problem of the "NAT traversal problem" that access from the public network side to the private network side is still impossible.

In recent years, also in "SIP" which has become popular as a protocol of VoIP, since the private network side is needed to be accessed from the public network side, the "NAT traversal problem" is requested to be solved.
In the case of SIP communication, in order that "signaling" treating calling out, calling in, cutting, and the like, and the "user data" treating an actual telephone call may use a different protocol and a different port, the "NAT traversal problem" is more complicated.

ALG (Application Level gateway) is offered conventionally as an existing solution method of the "NAT traversal problem."
This is the method of communicating by installing the server node which changes data in the boundary position of a private network and a public network, and it is required to install the server node newly.
Similarly, also in the invention of patent documents 1, the communication interface apparatus newly needs to be placed between a network and a terminal unit.
[Patent documents 1]
JP,2003-8776,A

The existing method as a different solution conventionally is UPnP (Universal Plug and Play).
This is the method of issuing a command for assigning a port as used for SIP communication to a device called a router located in a boundary of a private network and a public network and communicating by using the assigned port.
However, in this method, it had a plurality of problems: the router needs to support UPnP; when two or more terminal nodes are in the same private network, competition of a port should happen; since only port allocation to a router nearest to an SIP terminal node is carried out when a router is placed in two or more layer, access from the public network side to the private network side remains impossible; and neither port filtering nor a Web proxy can be passed.

### [Description of the Invention]

### [Problem(s) to be Solved by the Invention]

This invention is made in view of such a situation, and an object of this invention is to provide the peer-to-peer communication method and system which can solve the above-mentioned problem.

### [Means for Solving the Problem]

This invention is considered as composition shown below that the above-mentioned subject should be solved.
A summary of the invention according to claim 1 is a method for communicating which makes call out and call in enable, wherein the method for communicating comprises the steps of:
installing a virtual device driver served as a network interface card in a client information terminal or a server as software for OS of the client information terminal linked to an IP network which is a complex of intranet and / or Internet as a node or a server;
installing a virtual hub, which has a function to relay data from the virtual device driver to other suitable virtual device drivers when receiving this data, as software in the server; and
enabling peer-to-peer communication among the any client information terminals by utilizing a virtual private network.
A summary of the invention according to claim 2 is the method for communicating according to claim 1, wherein the server which is an access destination of the client information terminal as the node holds both sides of an address on an actual public network and an address in a virtual private network as an address of a server node, try access to the address on the actual public network firstly in the case of connection and try access to the address on the virtual private network when access is impossible, and is able to carry out peer to peer communication without imposing an overhead unnecessary when the client information terminal is on same public network.
A summary of the invention according to claim 3 is the method for communicating according to claim 1 or 2, wherein the method for communicating makes available to prevent the attack due to unauthorized access by intercepting communications other than the peer to peer communication for an intent by the virtual hub.
A summary of the invention according to claim 4 is the method for communicating according to any one of the claims 1 to 3, wherein the method for communicating is a means to make VoIP available.
A summary of the invention according to claim 5 is the method for communicating according to claim 4, wherein a communications protocol in the VoIP is an SIP protocol.
A summary of the invention according to claim 6 is the method for communicating according to any one of the claims 1 to 5, wherein a network system provided in the virtual device driver and the virtual hub is Ethernet (registered trademark) and connects among the any client information terminals by VPN.
A summary of the invention according to claim 7 is the method for communicating according to claim 6, wherein the VPN is L2-VPN.
A summary of the invention according to claim 8 is the method for communicating according to any one of the claims 1 to 7, wherein the method for communicating is able to carry out tunneling of IPv6 by peer to peer regardless of a network equipment existing in a path of the peer to peer communication on the network based on IPv4.
A summary of the invention according to claim 9 is the method for communicating according to any one of the claims 1 to 8, wherein the virtual device driver communicates TCP with a remote host directly not passing through application of a user mode, and a setup of said virtual device driver is available to export to a file and to import from the file.
A summary of the invention according to claim 10 is a communication system which makes call out and call in enable, wherein the communication system comprises:
a client information terminal, which the client information terminal connects as a node with an IP network being a complex of intranet and / or Internet and installs a virtual device driver installed as software which behaves as a network interface card to OS, and
a server, which a virtual hub installed as software further in addition to the virtual device driver, which the virtual hub has a function to relay data from the virtual device driver to other suitable virtual device drivers when receiving this data and bears a function of a line concentrator in a virtual private network, and connected with the IP network as the node; and
the communication system enables peer-to-peer communication among the any client information terminals utilizing the virtual private network.
A summary of the invention according to claim 11 is The communication system according to claim 10, wherein the server which is an access destination of the client information terminal as the node holds both sides of an address on an actual public network and an address in a virtual private network as an address of a server node, try access to the address on the actual public network firstly in the case of connection and try access to the address on the virtual private network when access is impossible, and is able to carry out peer to peer communication without imposing an overhead unnecessary when the client information terminal is on same public network.
A summary of the invention according to claim 12 is the communication system according to claim 10 or 11, wherein the communication system makes available to prevent the attack due to unauthorized access by intercepting communications other than the peer to peer communication for an intent by the virtual hub.
A summary of the invention according to claim 13 is the communication system according to any one of the claims 10 to 12, wherein the communication system is a means to make VoIP available.
A summary of the invention according to claim 14 is the communication system according to claim 13, wherein a communications protocol in the VoIP is an SIP protocol.
A summary of the invention according to claim 15 is the communication system according to any one of the claims 10 to 14, wherein a network system provided in the virtual device driver and the virtual hub is Ethernet (registered trademark) and connects among any client information terminals by VPN.
A summary of the invention according to claim 16 is the communication system according to claim 15, wherein the VPN is L2-VPN.
A summary of the invention according to claim 17 is the communication system according to any one of the claims 10 to 16, wherein the communication system is able to carry out tunneling of IPv6 by peer to peer regardless of a network equipment existing in a path of the peer to peer communication on the network based on IPv4.
A summary of the invention according to claim 18 is the communication system according to any one of the claims 10 to 17, wherein the virtual device driver communicates TCP with a remote host directly not passing through application of a user mode, and a setup of said virtual device driver is available to export to a file and to import from the file.
A summary of the invention according to claim 19 is a client information terminal in a communication system which makes call out and call in enable, wherein
the client information terminal connects as a node with an IP network which is a complex of intranet and / or Internet, and a virtual device driver which behaves as a network interface card to OS is installed as software.
A summary of the invention according to claim 20 is the client information terminal according to claim 19, wherein the virtual device driver is a means to make VoIP available.
A summary of the invention according to claim 21 is the client information terminal according to any one of the claims 19 to 21, wherein the client information terminal makes tunneling IPv6 by peer to peer regardless of a network equipment existing in a path of the communication, and the peer to peer communication is able to carry out on the network based on IPv4.
A summary of the invention according to claim 22 is the client information terminal according to any one of the claims 19 to 21, wherein the client information terminal makes tunneling IPv6 by peer to peer regardless of a network equipment existing in a path of the communication, and the peer to peer communication is able to carry out on the network based on IPv4.
A summary of the invention according to claim 23 is the client information terminal according to claim 21 or 22, wherein the client information terminal makes accessible at IPv6 by a function which is available the VPN.
A summary of the invention according to claim 24 is the client information terminal according to any one of the claims 19 to 23, wherein the virtual device driver communicates TCP with a remote host directly not passing through application of a user mode, and a setup of said virtual device driver is available to export to a file and to import from the file.
A summary of the invention according to claim 25 is a client information terminal as an accessible node, which the client information terminal connects with an IP network which is a complex of intranet and / or Internet, and a virtual device driver which behaves as a network interface card to OS is installed as software, and
a virtual hub installed as software further in addition to the virtual device driver, which the virtual hub has a function to relay data from the virtual device driver to other suitable virtual device drivers when receiving this data and bears a function of a line concentrator in a virtual private network; and
the server connects with the IP network as the node and is constructing the virtual private network.
A summary of the invention according to claim 26 is The server according to claim 25, wherein the server holds both sides of an address on an actual public network and an address in a virtual private network as an address of a server node,
since trying access to the address on the actual public network firstly in the case of connection and trying access to the address on the virtual private network when access is impossible,
the server is able to carry out peer-to-peer communication without imposing an overhead unnecessary when the client information terminal is on same public network.
A summary of the invention according to claim 27 is the server according to claim 25 or 26, wherein the server makes available to prevent the attack due to unauthorized access by intercepting communications other than the peer to peer communication for an intent by the virtual hub.
A summary of the invention according to claim 28 is the server according to any one of the claims 25 to 27, wherein the server comprises a means which makes available VoIP between the client information terminals which can connect to the server.
A summary of the invention according to claim 29 is the server according to claim 28, wherein a communications protocol in the VoIP is an SIP protocol.
A summary of the invention according to claim 30 is the server according to any one of the claims 25 to 29, wherein a network system provided in the virtual device driver and the virtual hub is Ethernet and connects among any client information terminals by VPN.
A summary of the invention according to claim 31 is the server according to claim 30, wherein the VPN is L2-VPN.
A summary of the invention according to claim 32 is The server according to any one of the claims 25 to 31, wherein the virtual device driver communicates TCP with a remote host directly not passing through application of a user mode, and a setup of said virtual device driver is available to export to a file and to import from the file.

### [Effect of the Invention]

Because a virtual device driver is mounted in a client terminal and a server as software, and also a virtual hub is implemented in a server as software, for example, by giving an L2-VPN function to the SIP terminal node itself, and installing the above-mentioned software in the existing server node, the peer to peer communication method and the system of this invention do not need to install a special server node, and even when between communicating client terminals use what kind of network environment and a protocol, they have the advantage of enabling peer to peer communication general-purpose.

In the peer-to-peer communication method of this invention, it is also possible to prevent unauthorized access and tapping because it is feasible to use user authentication and AES code, and the like.
Since it is also possible to incorporate a function which intercepts communications other than communication of the intent in a virtual hub, it is possible to maintain advanced security and to carry out peer-to-peer communication.

### [Brief Description of the Drawings]

[Drawing 1]
   Fig. 1 is a line block diagram of the SIP-VPN system as an example of the embodiment of this invention.
[Drawing 2]
   Fig. 2 is a call flow chart in this invention which does not use SIP Proxy.
[Drawing 3]
   Fig. 3 is a call flow chart in this invention which uses SIP Proxy and does not specify Record-Route.
[Drawing 4]
   Fig. 4 is the call flow chart in this invention which uses SIP Proxy and specifies Record-Route.
[Drawing 5]
   Fig. 5 is an image figure of the authentication function of the virtual hub in this invention.
[Drawing 6]
   Fig. 6 is a system interface figure of the virtual hub in this invention.
[Drawing 7]
   Fig. 7 is a system interface figure of a virtual device driver (network adaptor) in this invention.
[Drawing 8]
   Fig. 8 is the logic line block diagram established in the embodiment 1 of this invention.

### [Description of Notations]

- 1: VPN Virtual Network Adaptor Software Which is Virtual Device Driver
- 2: VPN Virtual Hub Software Which is Virtual Hub
- 30: SIP Server Group Setting Site
- 31: Location Server Node
- 32: SIP Server Node
- 33: Virtual Hub Server Node
- 34: Router
- 40: Internet
- 50: SIP Client Information Terminal Installation Site
- 51: Client Information Terminal Which is UA (User Agent) Node
- 52: UA Software Represented by Software Required to Realize VoIP Calls and the like.
- 53: NAT Router and the like.

### [Best Mode of Carrying Out the Invention]

In the following, the best form for carrying out this invention is explained in detail with referring to the figures.

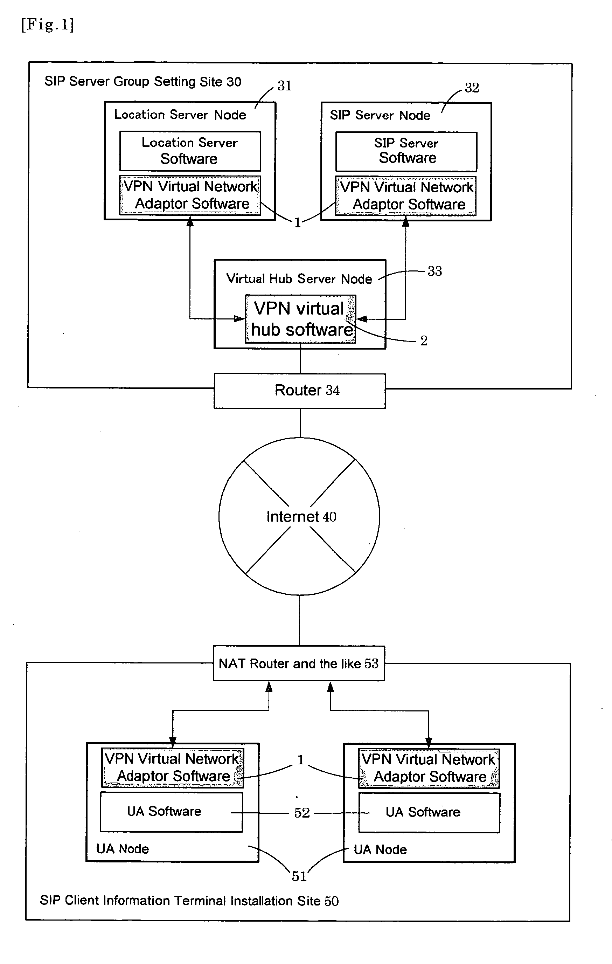

Fig. 1 is a line block diagram of the SIP-VPN system as an example of the embodiment of this invention which built the VPN system as an example of peer-to-peer communication supposing SIP communication.
VPN virtual network adaptor software 1 which is a virtual device driver, respectively is installed in Location Server node 31 and SIP Server node 32 which are server nodes.
VPN virtual hub software 2 which is a virtual hub is installed in Virtual Hub Server node 33 which is also a server node.
It may be located separately respectively, or the same server may be provided with two or more these functions, and these server nodes constituted SIP server group setting site 30 as a whole, and have connected it to Internet 40 via router 34.
SIP client information terminal installation site 50 is connected to Internet 40 via NAT router or the like 53.
In client information terminal 51 which is UA (User Agent) node,
VPN virtual network adaptor software 1 which is a virtual device driver is installed, and UA software 52 represented by a software and the like, which is required to realize VoIP calls utilizing SIP communication, is also installed.

Although each solving means for the conventional NAT traversal is a side which lacks unity because of specializing only in specific intranet environment or a variation being required for every kind of application,
A system built utilizing a virtual device driver and a virtual hub of this invention, for example, the above-mentioned SIP-VPN system, serves as a unified solution to various intranet environments.
By passing the virtual Ethernet (registered trademark) (registered trademark) frame in SIP-VPN on the TCP (Transfer Control Protocol) connection established from the interior of LAN to the Internet side, the connection establishment from the Internet 40 side to the interior of LAN and pass through port filtering, and the communication via the Web proxy is attained.

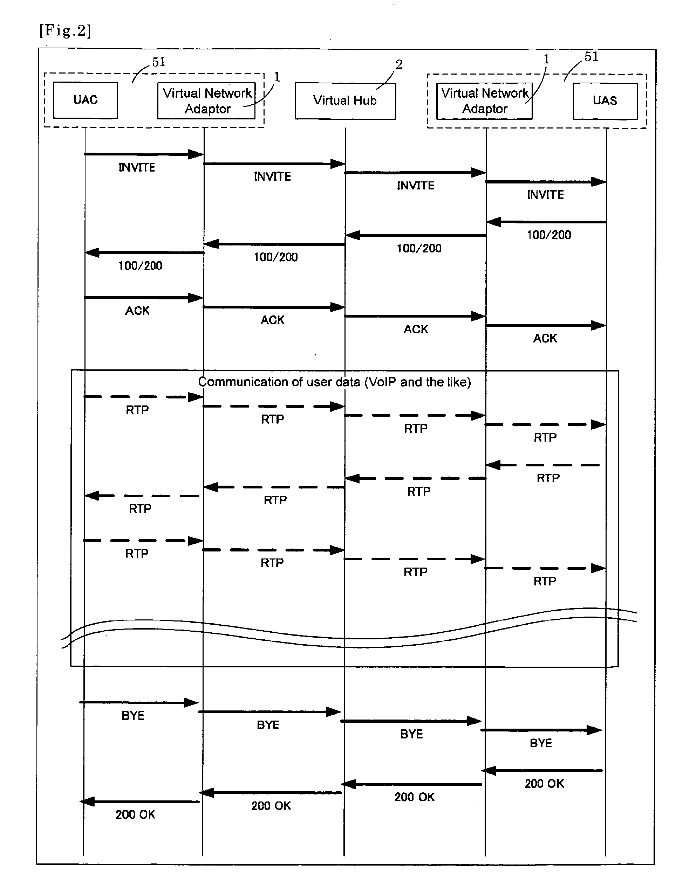

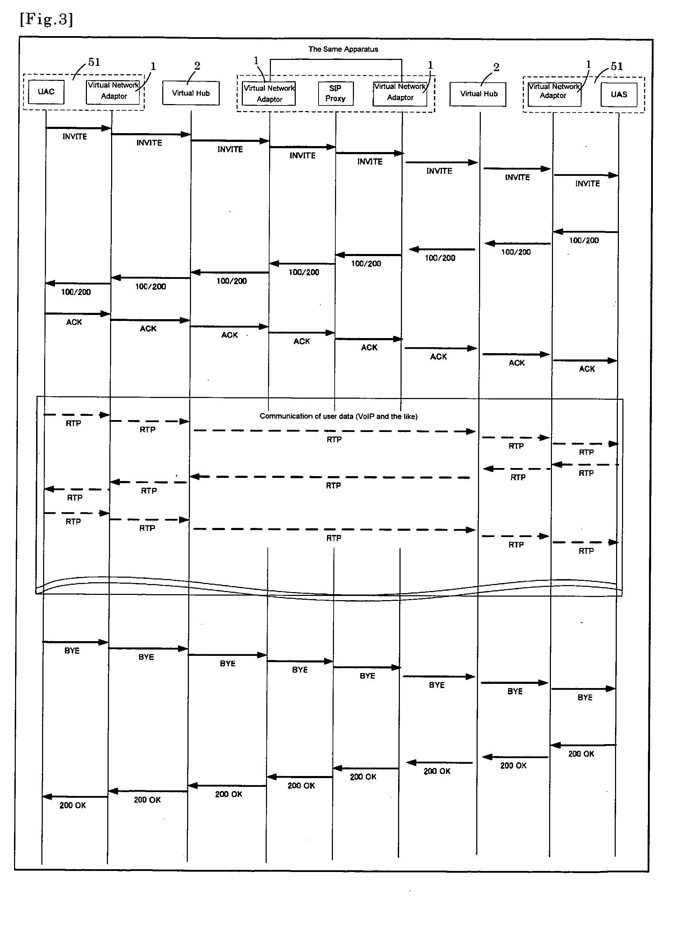

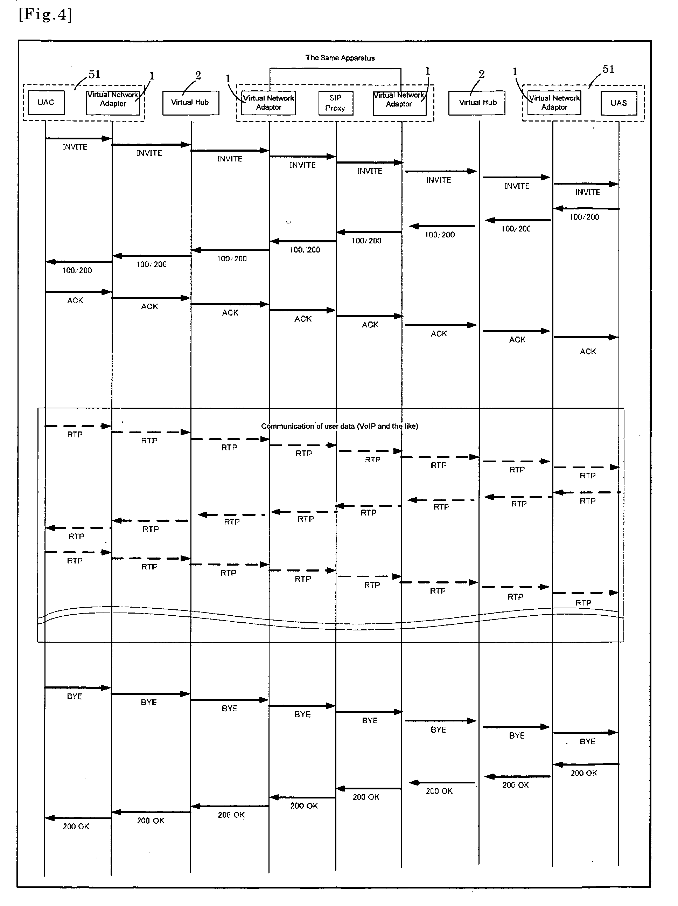

Such as a call flow shown in Fig. 2, Fig. 3, and Fig. 4, communication is established in communication by using the SIP-VPN system of the invention in this application, with / without being related to the existence of Proxy and the existence of assignment of Record-Route.

The embodiment of the virtual hub in this invention is described in detail in the following.

Virtual hub software 2 among software which comprises virtual LAN is software which corresponds to a line concentrator which performs operation equivalent to a switching hub as used in the field of actual LAN.
A main function of this software is a function to transmit to a specific connection port based on destination MAC address of a received pseudo Ethernet (registered trademark) (registered trademark) frame.
Functional requirements of virtual hub software of the invention in this application are a switching hub function which are explained in full detail below, an authentication function, and a DHCP server function.

A switching hub function which virtual hub software 2 has is a function to determine a virtual network adaptor of the suitable destination and to transmit, which is based on a destination MAC address of the virtual Ethernet (registered trademark) (registered trademark) frame received from another virtual network adaptor.
The determination of the destination follows the rule of the following table 1, and up to 64 MAC Address can be registered for every connection port from a virtual network adaptor.
This MAC Address registration is carried out by extracting a transmitting source MAC Address at the time of the virtual Ethernet (registered trademark) (registered trademark) frame reception from the connection port.

**[Table 1]**

| Table 1. Determination of destination connection port | |
|---|---|
| Destination MAC address | Destination connection port |
| Registered MAC Address | A port which is coincide with a registered MAC Address |
| Unregistered MAC Address | All the ports (however, excluding a transmitting source connection port) |
| 00.00.00.00.00.00 | All the ports (however, excluding a transmitting source connection port) |
| FF.FF.FF.FF.FF.FF | All the ports (however, excluding a transmitting source connection port) |

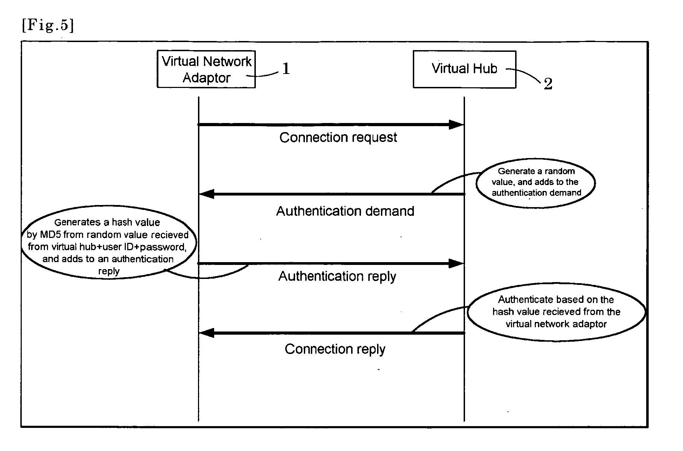

An authentication function which virtual hub software 2 has is explained as referred to Fig. 5.
When the authentication function is effective, a virtual hub replies an authentication demand to a connection request from a virtual network adaptor, and it also requires transmission of certification information.
A random value is generated in that case, and it adds to the authentication demand.
The virtual network adaptor generates a hash value by MD5 based on this random value, user ID, and a password, adds this to an authentication reply, and replies it to the virtual hub.
Also, the virtual hub itself carries out hashing, and compares and attests the hash value sent from the virtual network adaptor with the value acquired from carrying out hashing by itself.
When authentication is O.K., a connection reply is replied to a virtual network adaptor, and a logic connection is established.

A DHCP server function which virtual hub software 2 has is explained.
The virtual hub has the DHCP function and assigns an IP address according to a demand from a DHCP client function on a node in which a virtual network adaptor is working.

The virtual hub has a logical database shown in the Table 2 as follows.

**[Table 2]**

| Table 2. Logical Database | | |
|---|---|---|
| Name | Duration | Maximum record number |
| User account | Permanent (file save) | 1000 items |
| MAC address for switching | During process presence period | 64 items per connection port |
| IPaddress-MAC Address conversion table for DHCP | During process presence period or set-up address lease period (file save) | Infinity (However, the number of IP addresses belonging to the allocation range of the IP address serves as a maximum at that time) |

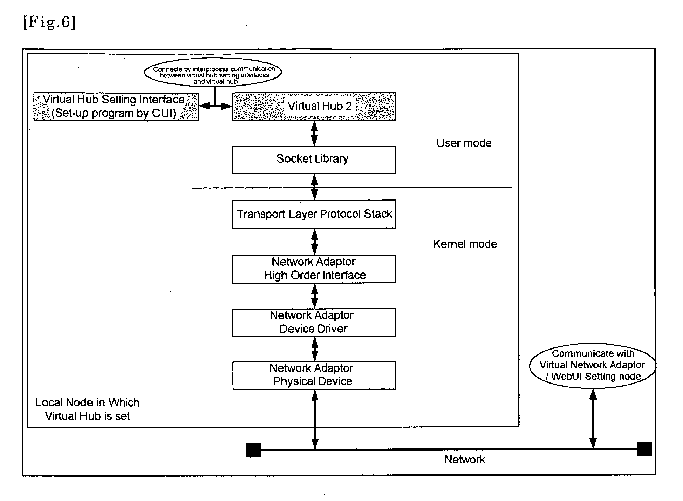

A system interface of the virtual hub is explained as referred to Fig. 6.
The virtual hub is implemented as a user mode program which operates by using a TCP/IP library which OS offers.
It is connected by interprocess communication between virtual hub setting interfaces.

A user interface of the virtual hub is explained.
The operation / setup from a user is to be carried out from a local node by CUI, and it also is to be carried out from a remote node via Web UI.
Items in which operation / setup is available are listed to the following table 3.

**[Table 3]**

| Table 3. Virtual hub functional listing | | | |
|---|---|---|---|
| Function category | Items | CUI | WebUI |
| WebUl setting | WebUl use propriety setup | ● | |
| | WebUl TCP port number setup | ● | |
| Virtual hub basic setting | TCP port number setup | ● | ● |
| | Authentication function ON/OFF setup | ● | ● |
| | DHCP function ON/OFF setup | ● | ● |
| | DHCP function Setup of the range of allocating IP address | ● | ● |
| Virtual hub account setting | Addition of account | ● | ● |
| | Password change of account | ● | ● |
| | Lock setup of account | ● | ● |
| | Deletion of account | ● | ● |

A virtual hub has the software performance of the Table 4 as follows.

**[Table 4]**

| **Table 4. Performance-requirements list** | |
|---|---|
| The number of Maximum connection | 30 lines |
| At the time of memory usage / 100 line connections | 18MB |
| At the time of a time delay /100 line connections * | 1.5ms |
| The maximum transfer capability | 1 OMbps |

| | |
|---|---|
| (A value based on a measurement value in a Windows machine CPU:Celeron 1GHz Memory 512MB) | |

Then, virtual network adaptor software 1 is explained in detail.
Functional requirements of virtual network adaptor software 1 are an encapsulation function, an enciphering function, a TCP transmitting function, a TCP receiving function, a decoding function, a reception frame notice function, and a connection retry function.
The encapsulation function is explained.
A frame of Ethernet (registered trademark) (registered trademark) is passed from a "network adaptor high order interface" located in a high order at the time of transmission of the Ethernet (registered trademark) (registered trademark) frame.
It is a function which encapsulates this as a virtual Ethernet (registered trademark) (registered trademark) frame.
The enciphering function is about: it is a function that the virtual network adaptor enciphers in AES 128 bit to a virtual Ethernet (registered trademark) (registered trademark) frame which encapsulation has already been proceeded.
The TCP transmitting function is a function which transmits a virtual Ethernet (registered trademark) (registered trademark) frame which encryption has already been processed to a virtual hub as a TCP packet.
The TCP receiving function is a function to receive the virtual Ethernet (registered trademark) (registered trademark) frame as a packet from a TCP stream from the virtual hub.
The decoding function is a function which decrypts the virtual Ethernet (registered trademark) (registered trademark) frame received from the TCP stream.
The reception frame notice function is a function which extracts the Ethernet (registered trademark) (registered trademark) frame from the decrypted virtual Ethernet (registered trademark) (registered trademark) frame and notifies to a "network adaptor higher rank interface" which located in a higher rank.
The connection retry function is explained.
The virtual network adaptor has a function to manage a TCP connection with the virtual hub.
Although connection is tried to the virtual hub at the time of starting of a virtual network adaptor, when the connection cannot be established here, the re-connection is tried by a connection retry function.
Re-connection trial is carried out by performing based on a preset value of a short retry interval, number of time for short retry, a long retry interval, and number of time of long retry.
In the short retry, a retry of a short interval is carried out; and in the long retry, a retry of a long interval is to be done;.
For example, a setup of a 1-time retry every 10 minutes is carried out when it cannot connect even if it retries 5 times for every second.

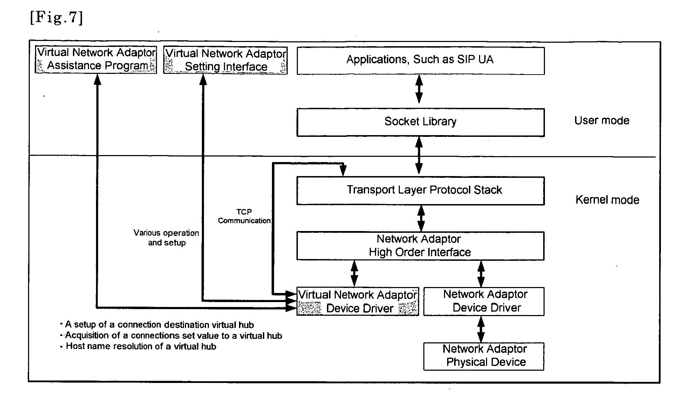

A system interface of the virtual network adaptor is explained as referred to Fig. 7.
The virtual network adaptor comprises a virtual network adaptor device driver, a virtual network adaptor-setting interface, and a virtual network adaptor assistance program, as shown in Fig. 7.

A user interface of a virtual network adaptor is explained.
It enables to carry out the operation / setup from a user from a local node by CUI or GUI.
Items in which operation / setup is available are listed to Table 5 as follows.

**[Table 5]**

| Table 5. Item list which operation / setup is available | |
|---|---|
| Function category | Items |
| Basic operation | ON/OFF of virtual network adaptor |
| Connections seting to a virtual hub | IP address or host name of virtual hub |
| | Virtual hub awaiting port number. |
| | Short retry interval |
| | Short retry time |
| | Long retry interval |
| | Long retry time |
| Authentication seting | ON/OFF of authentication function |
| | User ID |
| | Password |
| Encryption setting | ON/OFF of enciphering function |
| | Cryptographic key value |
| IP address setting | Change of automatic acquisition / manual setting of IP address |
| | IP address (in the case of manual setting) |
| | Subnet mask (in the case of manual setting) |
| | Default gateway (in the case of manual setting) |
| DNS server address setting | Change of automatic acquisition / manual setting of DNS server address |
| | Primary DNS server address (in the case of manual setting) |
| | Secondary DNS server address (in the case of manual setting) |

The virtual network adaptor has the requirements for software in Table 6 as follows.

**[Table 6]**

| Table 6. Performance-requirements list | |
|---|---|
| Memory usage / adapter | 300KB |
| Time delay involving transmission and reception processing | 0.5ms |
| (in the case of AES 128 bit encryption) | (Each transmission and reception) |

| | |
|---|---|
| (A value based on a measurement value in a Windows machine CPU:Celeron 1GHz Memory 512MB) | |

### [Embodiment 1]

NAT traversal by a SIP-VPN system of the invention in this application is evaluated.
A communication test between an SIP server (a proxy, a resist) which works on a computer of a remote location, and an SIP client is done by using environment of "Yahoo BB Mobile" wireless LAN service which Softbank BB, Inc. provides.

Their company site is held a fiber-optics network by using VDSL, which performs 16M bps upward / 16M bps downward (USEN GATE 01 apartment type).
It is an intranet of a type where the Internet is translated to LAN in NAT (the WAN side global IP address of a router is one, and the LAN side private IP address of a router is more than one).
The router of their company site is set to receive a call in from the outside to a virtual hub.
Inside of a site of a Yahoo BB Mobile is also the intranet of type where the Internet is translated to LAN in NAT, and the LAN side is wireless LAN (802.11b / 11M bps).

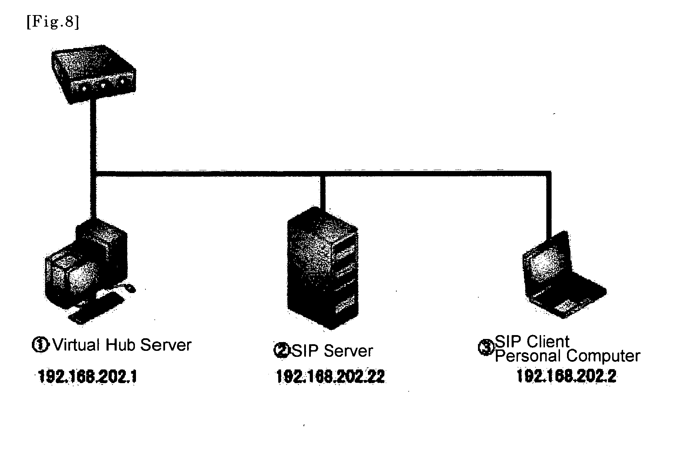

As a result of using a SIP-VPN function in the above-mentioned test environment, logic line configuration as shown in Fig. 8 has been secured.

It is shown a software stack of each computer used by the test.
Virtual hub server (Windows (registered trademark) XP Pro / Athron XP 2000+ / 512 MB): SIP-VPN virtual hub operation, SIP-VPN virtual NIC (network adaptor software) operation (it is not used in this experiment), SIP server (White Box Linux 3.0 / Athron XP 2000+ / 192 MB) : Asterisk operation (an SIP proxy server, a resist server, available for an answering machine function), SIP-VPN virtual NIC operation.
SIP client personal computer (Windows (registered trademark) XP Pro / Crusoe 800MHz / 512MB): X-Lite operation (SIP client), SIP-VPN virtual NIC operation.

As a result of having tried communication to the answering machine function of the SIP server in their company site from an SIP client within a Yahoo BB Mobile site, it is validated that signaling and a voice call are carried out normally, and even if Symmetric NAT and a firewall existed, it is confirmed that an audio transmit and receive can be carried out normally.

### [Industrial applicability]

Because the communication method of this invention does not need to add special equipment on the existing hardware environment, it enables to introduce easily to large area.

Since communication through the Symmetric NAT environment, the multi stage NAT environment, and the Web proxy environment, which is not able to cope with the conventional NAT traversal function, is also enabled, it also becomes available to communicate by introducing this invention in environment for which peer to peer communication is formerly impossible.

Also in a side of communicative security, this invention can introduce peer-to-peer communication environment, without a weak point on security increasing, since it has a function which goes via a HTTPS proxy in a VPN function.

## Claims

1. A method for communicating which makes call out and call in enable, wherein the method for communicating comprises the steps of:
installing, as software, a virtual device driver behaved as a network interface card in a client information terminal or a server for OS of the client information terminal or the server connected to an IP network which is a complex of intranet and / or Internet as a node;
installing, in case of receiving this data from the virtual device driver, a virtual hub having a function to relay the data to the other suitable virtual device drivers, as software in the server; and
enabling peer-to-peer communication among the any client information terminals by utilizing a virtual private network.

2. The method for communicating according to claim 1, wherein the server which is an access destination of the client information terminal as the node holds both sides of an address on an actual public network and an address in a virtual private network as an address of a server node, try access to the address on the actual public network firstly in the case of connection and try access to the address on the virtual private network when access is impossible, and is able to carry out peer to peer communication without imposing an overhead unnecessary when the client information terminal is on same public network.

3. The method for communicating according to claim 1 or 2, wherein the method for communicating makes available to prevent the attack due to unauthorized access by intercepting communications other than the peer to peer communication for an intent by the virtual hub.

4. The method for communicating according to any one of the claims 1 to 3, wherein the method for communicating is a means to make VoIP available.

5. The method for communicating according to claim 4, wherein a communications protocol in the VoIP is an SIP protocol.

6. The method for communicating according to any one of the claims 1 to 5, wherein a network system provided in the virtual device driver and the virtual hub is Ethernet (registered trademark) and connects among the any client information terminals by VPN.

7. The method for communicating according to claim 6, wherein the VPN is L2-VPN.

8. The method for communicating according to any one of the claims 1 to 7, wherein the method for communicating is able to carry out tunneling of IPv6 by peer to peer regardless of a network equipment existing in a path of the peer to peer communication on the network based on IPv4.

9. The method for communicating according to any one of the claims 1 to 8, wherein the virtual device driver communicates TCP with a remote host directly not passing through application of a user mode, and a setup of said virtual device driver is available to export to a file and to import from the file.

10. A communication system which makes call out and call in enable, wherein the communication system comprises:
a client information terminal connecting, as a node, with an IP network being a complex of intranet and / or Internet and installing a virtual device driver, as software, behaved as a network interface card to OS, and
a server installing a virtual hub, as software, further in addition to the virtual device driver, having a function to relay data from the virtual device driver to other suitable virtual device drivers in case of receiving this data and bears a function of a line concentrator in a virtual private network, and connected with the IP network as the node; and
the communication system enables peer-to-peer communication among the any client information terminals utilizing the virtual private network.

11. The communication system according to claim 10, wherein the server which is an access destination of the client information terminal as the node
holds both sides of an address on an actual public network and an address in a virtual private network as an address of a server node,
try access to the address on the actual public network firstly in the case of connection and try access to the address on the virtual private network when access is impossible, and
is able to carry out peer-to-peer communication without imposing an overhead unnecessary when the client information terminal is on same public network.

12. The communication system according to claim 10 or 11, wherein the communication system makes available to prevent the attack due to unauthorized access by intercepting communications other than the peer to peer communication for an intent by the virtual hub.

13. The communication system according to any one of the claims 10 to 12, wherein the communication system is a means to make VoIP available.

14. The communication system according to claim 13, wherein a communications protocol in the VoIP is an SIP protocol.

15. The communication system according to any one of the claims 10 to 14, wherein a network system provided in the virtual device driver and the virtual hub is Ethernet (registered trademark) and connects among any client information terminals by VPN.

16. The communication system according to claim 15, wherein the VPN is L2-VPN.

17. The communication system according to any one of the claims 10 to 16, wherein the communication system is able to carry out tunneling of IPv6 by peer to peer regardless of a network equipment existing in a path of the peer to peer communication on the network based on IPv4.

18. The communication system according to any one of the claims 10 to 17, wherein the virtual device driver communicates TCP with a remote host directly not passing through application of a user mode, and a setup of said virtual device driver is available to export to a file and to import from the file.

19. A client information terminal in a communication system which makes call out and call in enable, wherein
the client information terminal connects, as a node, with an IP network which is a complex of intranet and / or Internet and installs, as software, a virtual device driver behaving as a network interface card to OS.

20. The client information terminal according to claim 19, wherein the virtual device driver is a means to make VoIP available.

21. The client information terminal according to claim 19 or 20, wherein a network system provided in the virtual device driver is Ethernet (registered trademark) and connects among any client information terminals by VPN.

22. The client information terminal according to any one of the claims 19 to 21, wherein the client information terminal makes tunneling IPv6 by peer to peer regardless of a network equipment existing in a path of the communication, and the peer to peer communication is able to carry out on the network based on IPv4.

23. The client information terminal according to claim 21 or 22, wherein the client information terminal makes accessible at IPv6 by a function which is available the VPN.

24. The client information terminal according to any one of the claims 19 to 23, wherein the virtual device driver communicates TCP with a remote host directly not passing through application of a user mode, and a setup of said virtual device driver is available to export to a file and to import from the file.

25. A server in a communication system which makes call out and call in enable, wherein
with providing, as an accessible node, a client information terminal connecting with an IP network which is a complex of intranet and / or Internet, and a virtual device driver behaving as a network interface card to OS is installed as software,
the server, further in addition to the virtual device driver, installs a virtual hub, as software, having a function to relay, in case of receiving a data from the virtual device driver, this data to the other suitable virtual device drivers and bearing a function of a line concentrator in a virtual private network, connects with the IP network as the node, and constructs the virtual private network.

26. The server according to claim 25, wherein the server holds both sides of an address on an actual public network and an address in a virtual private network as an address of a server node,
since trying access to the address on the actual public network firstly in the case of connection and trying access to the address on the virtual private network when access is impossible,
the server is able to carry out peer-to-peer communication without imposing an overhead unnecessary when the client information terminal is on same public network.

27. The server according to claim 25 or 26, wherein the server makes available to prevent the attack due to unauthorized access by intercepting communications other than the peer to peer communication for an intent by the virtual hub.

28. The server according to any one of the claims 25 to 27, wherein the server comprises a means which makes available VoIP between the client information terminals which can connect to the server.

29. The server according to claim 28, wherein a communications protocol in the VoIP is an SIP protocol.

30. The server according to any one of the claims 25 to 29, wherein a network system provided in the virtual device driver and the virtual hub is Ethernet and connects among any client information terminals by VPN.

31. The server according to claim 30, wherein the VPN is L2-VPN.

32. The server according to any one of the claims 25 to 31, wherein the virtual device driver communicates TCP with a remote host directly not passing through application of a user mode, and a setup of said virtual device driver is available to export to a file and to import from the file.
